(19) Europäisches Patentamt
European Patent Office
Office européen des brevets

(11) **EP 1 977 964 A1**

(12) **EUROPEAN PATENT APPLICATION**
published in accordance with Art. 158(3) EPC

(43) Date of publication:
**08.10.2008 Bulletin 2008/41**

(51) Int Cl.:
**B62K 21/10** *(2006.01)*      **B62J 39/00** *(2006.01)*

(21) Application number: **06822574.7**

(22) Date of filing: **30.10.2006**

(86) International application number:
**PCT/JP2006/321617**

(87) International publication number:
**WO 2007/086176 (02.08.2007 Gazette 2007/31)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **27.01.2006 JP 2006018471**

(71) Applicant: **Murata Manufacturing Co. Ltd.**
**Nagaokakyo-shi, Kyoto 617-8555 (JP)**

(72) Inventors:
• **HIRATA, Atsuhiko**
**Nagaokakyo-shi Kyoto 6178555 (JP)**
• **TSUJI, Shigeru**
**Nagaokakyo-shi Kyoto 6178555 (JP)**

• **WATANABE, Tomonari**
**Nagaokakyo-shi Kyoto 6178555 (JP)**
• **FUKUNAGA, Shigeki**
**Nagaokakyo-shi Kyoto 6178555 (JP)**
• **YOSHIKAWA, Koichi**
**Nagaokakyo-shi Kyoto 6178555 (JP)**
• **KAWAI, Koji**
**Nagaokakyo-shi Kyoto 6178555 (JP)**

(74) Representative: **Lloyd, Patrick Alexander Desmond**
**Reddie & Grose**
**16 Theobalds Road**
**London**
**WC1X 8PL (GB)**

(54) **OVERTURN PREVENTION CONTROLLER FOR TWO-WHEELED VEHICLE**

(57)     [Object] To provide an overturn prevention control device for a two-wheel vehicle, the overturn prevention control device enabling the two-wheel vehicle to perform stable autonomous traveling using a relatively simple control loop cvcn when a zero-set error or offset noise is present.

[Solving Means] An overturn prevention control device for a two-wheel vehicle having a vehicle body A, a front wheel 2, an actuator 7 that steers the front wheel, a rear wheel 3, and a rear-wheel driving portion 4 includes an angular velocity sensor 8 and control means 12 for outputting a steering angle command signal $\delta_r$ for controlling the actuator 7. The angular velocity sensor 8 has a detection axis 8a, is mounted on the vehicle body such that the detection axis 8a is downwardly inclined at a predetermined angle relative to a forward direction of the vehicle body, and detects an angular velocity $\omega$ about the detection axis. The angular velocity $\omega$ detected by the angular velocity sensor 8 contains an angular velocity $\omega_1$ in a lateral direction of inclination and an angular velocity $\omega_2$ in an azimuthal direction. The zero-set error and offset noise are incorporated into the azimuth angle command. Thus, the two-wheel vehicle can be prevented from overturning.

FIG. 4

$(\omega = \omega_1 \cos\phi + \omega_2 \sin\phi)$

**Description**

Technical Field

The present invention relates to an overturn prevention control device for a two-wheel vehicle, and in particular, to an overturn prevention control device for a two-wheel vehicle capable of traveling autonomously without a human driver.

Background Art

There are known autonomous vehicles without a human driver using an electric motor or an internal-combustion engine as a prime motor and being controlled wirelessly or automatically. When traveling straight, such a vehicle can maintain its balance by steering right for a rightward tilt of the body of the vehicle and steering left for a leftward tilt of the vehicle body. When traveling in a curve, the vehicle can set a target value for a tilt angle of the vehicle body to a direction inclined from a vertical direction, and can steer right for a rightward tilt and steer left for a leftward tilt by using the set angle as the reference. In either case, it is necessary to estimate a tilt angle of the vehicle body.

Patent Document 1 describes an autonomous vehicle without a human driver, the autonomous vehicle being capable of making a run that is always approximated to an actual machine in stable and various modes from low to high speeds. This autonomous driverless vehicle includes a frame forming a vehicle body, a drive wheel disposed in an end of the frame and rotatable by a prime motor, and a fork mounted to another end of the frame and supporting a steerable wheel so as to allow the steerable wheel to be freely driven and also includes an angular velocity sensor that outputs an angular velocity signal for a fall angle of the vehicle body, an arithmetic unit that generates a steering angle control signal, and an actuator that changes an angle of travel of the steered wheel in accordance with the steering angle control signal output from the arithmetic unit. The arithmetic unit includes angular velocity command value generating means for generating an angular velocity command value on the basis of an externally provided travel control signal indicating an angle of travel of the steered wheel, control signal generating means for generating a steering angle control signal to be supplied to the actuator on the basis of the deviation between an angular velocity signal being a detection signal of the angular velocity sensor and the angular velocity command value being an output from the angular velocity command value generating means, and feedback means for feeding the steering angle control signal generated by the control signal generating means back to the angular velocity command value generating means. The actuator generates a steering control signal for controlling the steered wheel in a direction in which a deviation in fall angular velocity of the vehicle body during travel is reduced in accordance with the steering angle control signal from the arithmetic unit.

It is a matter of course that, when the vehicle body falls, the direction of the steered wheel is controlled in a direction in which the fall angle is reduced. For the above autonomous driverless two-wheel vehicle, the steering angle control signal to be supplied to the actuator is generated based on the deviation between the detection signal of the angular velocity sensor and the angular velocity command value generated based on the externally provided travel control signal indicating an angle of travel of the steered wheel. However, obtaining a proper angular velocity command value from an angle of travel of the steered wheel and obtaining a steering angle directly from the deviation between a detected angular velocity value and the angular velocity command value need complicated computation and many parameters. This leads to complicated control, so it is difficult to perform stable autonomous travel.

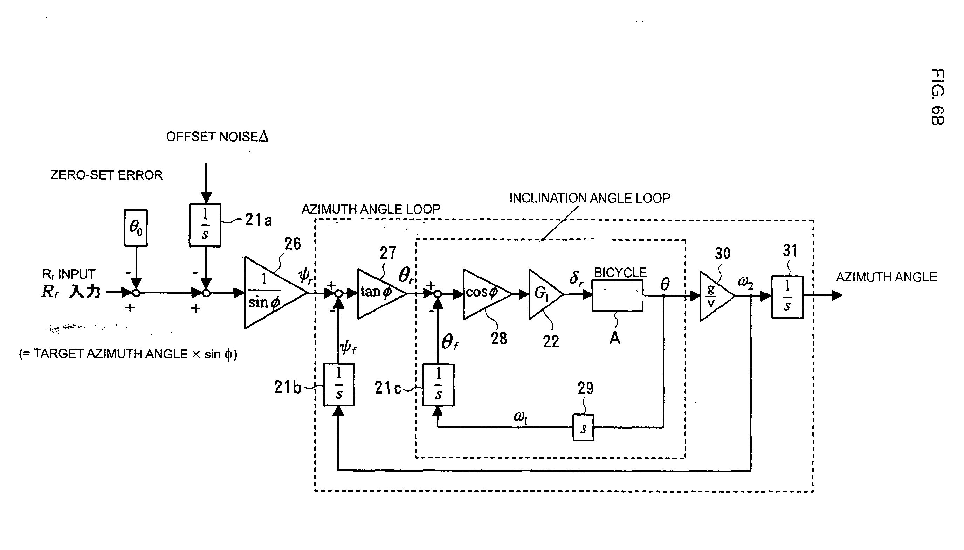

One example of a relatively simple control method for preventing a two-wheel vehicle from overturning is illustrated in Fig. 7. In this method, an angular velocity $\omega_1$ in a lateral direction of inclination of a vehicle body by use of an angular velocity sensor 20, the angular velocity $\omega_1$ is integrated by use of an integrator 21 to obtain an inclination angle $\theta_f$ in the lateral direction of inclination of the vehicle body, the deviation between the obtained inclination angle $\theta_f$ and an inclination angle command value $\theta_r$ is input into arithmetic means 22 having a proportional gain $G_1$ to generate a steering angle command value $\delta_r$, and the generated command value $\delta_r$ is output to an actuator 23. This method is a method of obtaining a steering angle from the deviation in inclination angle using the proportional gain $G_1$. Therefore, it is advantageous in that computation is simple and, because not many parameters are required, the method is executable in a relatively simple manner.

However, an angular velocity sensor typically has a deviation (drift) in detection signal due to changes in environmental temperature or a lapse of time, and this has adverse effects as an offset. Together with the offset, external noise entering the angular velocity sensor 20 affects an angular velocity detection signal. In addition, if the vehicle body is already inclined when the vehicle starts traveling, it affects the inclination angle $\theta_f$ as a zero-set error $\theta_0$. Such problems may occur in not only the control method illustrated in Fig. 7 but also the control method described in Patent Document 1.

Fig. 8 is an actual control block diagram in which error factors (zero-set error $\theta_0$ and offset noise $\Delta$) are added to the block diagram illustrated in Fig. 7. As illustrated in Fig. 8, the zero-set error $\theta_0$ is applied to the inclination angle $\theta_f$, and the offset noise $\Delta$ is applied to the angular velocity $\omega_1$.

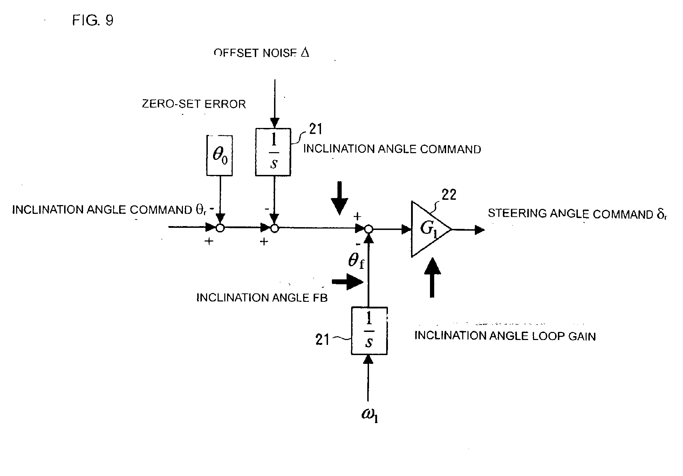

Fig. 9 is an equivalent block diagram into which the block diagram illustrated in Fig. 8 is rewritten. As illustrated in Fig. 9, the zero-set error $\theta_0$ is directly applied to the inclination angle command value $\theta_r$, and the integral of the offset noise $\Delta$ is also applied to the inclination

angle command value $\theta_r$. As a result, the zero-set error urges the vehicle body to incline even when the inclination angle command value $\theta_r$ is zero, so the path taken by the two-wheel vehicle is a curve. The integral of the offset noise $\Delta$ affects the inclination angle command value $\theta_r$, and the two-wheel vehicle obeys the inclination angle command value $\theta_r$ containing the integral of the offset noise $\Delta$, so the actual inclination angle continues to increase. This causes the two-wheel vehicle to overturn in a short time. As described above, although the control method illustrated in Fig. 7 is a simple control method, a problem in which it is difficult to perform stable autonomous travel due to the zero-set error $\theta_0$ and offset noise $\Delta$ exists in actual control.

Patent Document 1: Japanese Registered Utility Model No. 2577593

Disclosure of Invention

Problems to be Solved by the Invention

Accordingly, an object of preferred embodiments of the present invention is to provide an overturn prevention control device that allows a two-wheel vehicle to perform stable autonomous travel using a relatively simple control loop even when a zero-set error or offset noise is present. Means for Solving the Problems

The present invention is an overturn prevention control device for a two-wheel vehicle having a vehicle body, a steerable front wheel provided to a front end of the vehicle body, an actuator that steers the front wheel, a rear wheel provided to a rear end of the vehicle body, and a rear-wheel driving portion that drives the rear wheel. The overturn prevention control device includes an angular velocity sensor and control means for outputting a steering angle command signal $\delta_r$ for controlling the actuator. The angular velocity sensor has a detection axis, is mounted on the vehicle body such that the detection axis is downwardly inclined at a predetermined angle relative to a forward direction of the vehicle body, and detects an angular velocity $\omega$ about the detection axis. The control means includes integration means for integrating the angular velocity $\omega$ to obtain a first angle signal and steering-angle-signal generating means for generating the steering angle command signal $\delta_r$ using a deviation between the first angle signal and an externally provided second angle signal. The first angle is controlled so as to be made near the second angle by inputting of the steering angle command signal $\delta_r$ into the actuator.

A traditional angular sensor detects only an angular velocity $\omega_1$ in the lateral direction of inclination of the vehicle body, so the sensor is mounted such that its detection axis faces in the forward direction of the vehicle body (horizontal axis in the direction of travel of the vehicle body). In contrast, in the present invention, the angular velocity sensor is mounted on the vehicle body such that its detection axis is downwardly inclined relative to the forward direction of the vehicle body, so the angular velocity $\omega$ containing the angular velocity $\omega_1$ component in the lateral direction of inclination of the vehicle body and the angular velocity $\omega_2$ component in the azimuthal direction is thereby detected. By integration of the angular velocity $\omega$ to obtain a first angle signal, generation of a steering angle command signal $\delta_r$ using the deviation between the first angle signal and an externally provided second angle signal, input of the steering angle command signal $\delta_r$ into the actuator, similar advantages to those obtained when an azimuth angle loop is set outside an inclination angle loop are obtainable. The zero-set error merely provides an initial value of the azimuth angle command with a deviation, and, for the offset noise, the integral thereof merely affects the azimuth angle command. That is, the zero-set error and the offset noise are incorporated into the azimuth angle command, and the inclination angle in the lateral direction of inclination is automatically controlled in the internal loop (inclination angle loop). Accordingly, the two-wheel vehicle can be prevented from overturning. Here, the inclination angle is an angle in the lateral direction of inclination of the vehicle body, and the steering angle is an angle that represents the direction of the front wheel. In addition, the azimuth angle is an angle that represents the direction of travel of the vehicle body, and the mounting angle is an angle of downward tilt of the detection axis of the angular velocity sensor relative to the forward horizontal axis. Because the detection axis of the angular velocity sensor extends in the longitudinal direction, setting the detection axis using an angle of upward tilt to the backward horizontal axis is equal to the above.

According to a preferred embodiment, a mounting angle $\phi$ of the detection axis of the angular velocity sensor relative to a horizontal axis may preferably be an angle that allows an angular velocity $\omega_1$ in a lateral direction of inclination of the vehicle body and an angular velocity $\omega_2$ in an azimuthal direction to be extracted from the angular velocity $\omega$. The optimal value of the mounting angle $\phi$ varies depending on the structure of the vehicle body (e.g., the mass or the position of the center of gravity), the traveling speed of the two-wheel vehicle, or other factors. The mounting angle $\phi$ may preferably be at least an angle that allows the angular velocity $\omega_1$ in the lateral direction of inclination of the vehicle body and the angular velocity $\omega_2$ in the azimuthal direction to be extracted from the angular velocity $\omega$. If the mounting angle $\phi$ is too small, the angular velocity $\omega_2$ in the azimuthal direction would be difficult to extract. If the mounting angle $\phi$ is too large, the azimuth angle loop gain would be significantly large and control would be unstable.

According to a preferred embodiment, the angular velocity $\omega$ detected by the angular velocity sensor can be represented by

$$\omega = \omega_1 \cos \phi + \omega_2 \sin \phi$$

where $\phi$ is a mounting angle of the detection axis relative to a horizontal axis, $\omega_1$ is an angular velocity in a lateral direction of inclination of the vehicle body, and $\omega_2$ is an angular velocity in an azimuthal direction.

According to a preferred embodiment, the second angle signal can be given by a target azimuth angle $\times \sin \phi$. That is, because the second angle signal being a command signal has only an azimuth angle component, the direction of travel of the vehicle body can be directed in a target direction (orientation). In other words, the direction of travel is also controllable. In consideration of that the azimuth angle command is affected by the offset and noise, the vehicle can also be accurately controlled to a target position by correction of the position of the vehicle using other position recognition means.

Advantages of Preferred Embodiments of the Invention

As described above, according to the overturn prevention control device for a two-wheel vehicle in accordance with the present invention, the angular velocity sensor is mounted on the vehicle body such that its detection axis is downwardly inclined relative to the forward direction of the vehicle body. Therefore, similar advantages to those obtained when the azimuth angle loop is set outside the inclination angle loop are obtainable. This causes the zero-set error and the offset noise to be incorporated into the azimuth angle command, and causes the inclination angle in the lateral direction of inclination to be automatically controlled in the internal loop (inclination angle loop). Accordingly, the two-wheel vehicle can be reliably prevented from overturning. Additionally, because the control means for outputting a steering angle command signal can be constructed of the integration means and the simple arithmetic unit having a proportional gain, the structure is simple and easy to make. Best Modes for Carrying Out the Invention

Preferred embodiments of the present invention will be described below with reference to the drawings.

(First Embodiment)

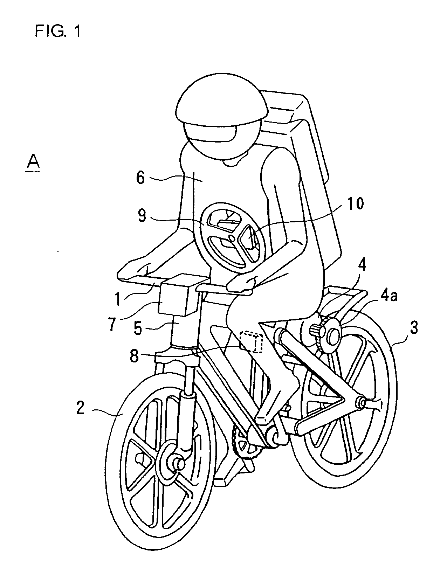

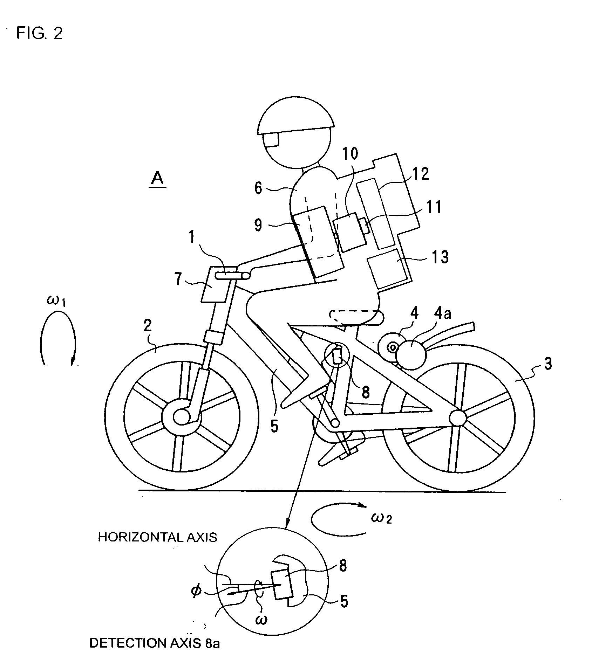

Figs. 1 to 3 illustrate a first embodiment in which an overturn prevention control device according to the present invention is applied to a bicycle robot. The bicycle robot A includes a steering handlebar 1, a front wheel 2 steerable by the steering handlebar 1, a rear wheel 3, a rear-wheel driving motor 4 that drives the rear wheel 3, a frame 5 supporting the front wheel 2 and the rear wheel 3 such that they are freely rotatable, a doll 6 mounted on the frame 5, and an actuator 7 that steers the handlebar 1 (front wheel 2).

In this example, the actuator 7 is provided on the central portion of the handlebar 1. However, the actuator 7 may be provided on any position or take any form as long as it can steer the front wheel 2. For example, the front wheel 2 may be steered by an arm of the doll 6 via the handlebar 1. In this example, the rear wheel 3 is driven by the rear-wheel driving motor 4 via a roller 4a. However, the present invention is not limited to this example. The rear-wheel driving motor 4 may drive the shaft of the rear wheel 3. Alternatively, the rear wheel 3 may be driven via a chain by the doll 6 pedaling the bicycle. In addition, an internal combustion engine or other components may be used in place of the driving motor 4.

The frame 5 is equipped with an angular velocity sensor 8 such that a detection axis 8a thereof is downwardly inclined at a predetermined angle $\phi$ relative to the forward direction of the vehicle body of the bicycle robot A. The angular velocity sensor 8 can detect an angular velocity $\omega$ about the detection axis 8a. The mounting angle $\phi$ of the angular velocity sensor 8 (tilt angle of the detection axis 8a to a horizontal axis) may preferably be an angle that allows an angular velocity $\omega_1$ in a lateral direction of inclination of the vehicle body (including the frame 5 and the doll 6) and an angular velocity $\omega_2$ in an azimuthal direction to be extracted from the angular velocity $\omega$, and may preferably be, for example, on the order of approximately 4° to 8°. The optimal value of the mounting angle $\phi$ varies depending on the structure of the vehicle body (e.g., the mass or the position of the center of gravity), the traveling speed, or other factors, so the mounting angle $\phi$ is not limited to the above angle range.

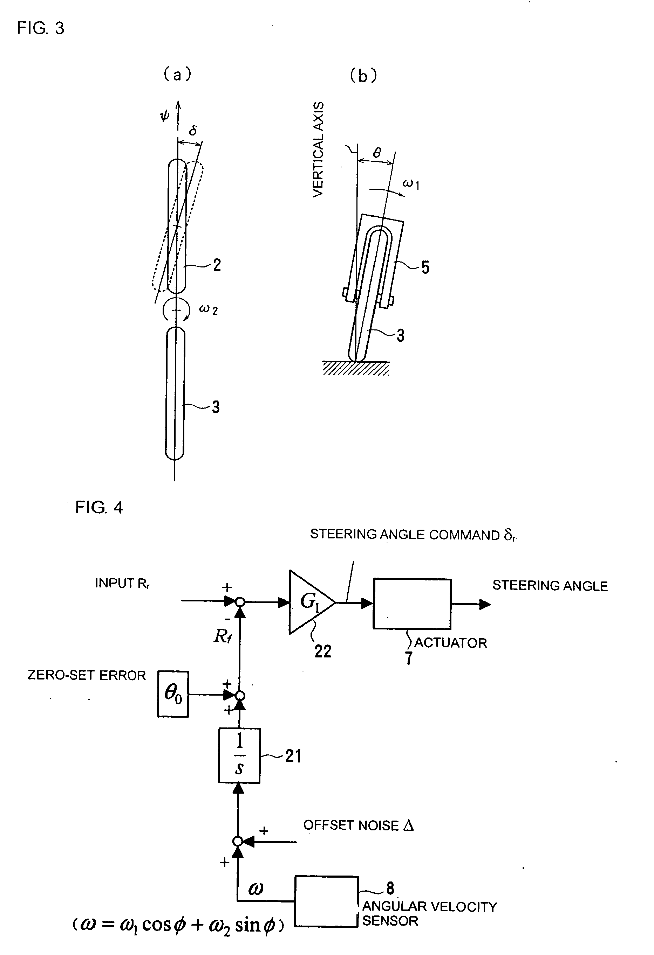

Here, the symbols used in the description below are defined. As illustrated in Fig. 3, the inclination angle $\theta$ is an angle in a lateral direction of inclination of the vehicle body (rear wheel 3) relative to a vertical direction. The steering angle $\delta$ is an angle that represents the direction of the front wheel relative to the direction of travel of the vehicle body. The azimuth angle $\psi$ is an angle that represents the direction of travel of the vehicle body relative to a reference direction (for example, the north). The mounting angle $\phi$ is a tilt angle of the detection axis 8a relative to the horizontal axis (in the forward direction), as previously described. The angular velocity $\omega$ is an angular velocity about the detection axis 8a. The angular velocity $\omega_1$ is an angular velocity in a lateral direction of inclination of the vehicle body. The angular velocity $\omega_2$ is an angle velocity in an azimuthal direction.

An inertia rotor 9, a balance motor 10 that drives the inertia rotor 9, and an encoder 11 that measures a rotation angle of the balance motor 10 are mounted in the chest of the doll 6. The rotating shaft of each of the inertia rotor 9 and the motor 10 faces in a substantially longitudinal direction of the bicycle A. The substantially longitudinal direction here indicates that it includes an exact longitudinal direction and can be slightly displaced upward or downward therefrom. A control substrate 12 that controls the rear-wheel driving motor 4, the steering actuator 7, the balance motor 10, and other components and a battery 13 are mounted in the back of the doll 6.

During normal travel, the vehicle can be prevented from overturning by maintaining its balance by steering the handlebar 1 (front wheel 2). Specifically, the vehicle can be prevented from overturning by steering the handlebar 1 in a direction in which the vehicle body is inclined. During halts or while traveling at a very low speed, because it is difficult to maintain the balance by steering the handlebar 1 alone, the vehicle is controlled such that the balance is maintained by exploiting a reaction occurring when the inertia rotor 9 is driven. Control for preventing an overturn by use of the inertia rotor 9 is described in Japanese Patent Application No. 2005-348373 filed by the applicant of the present invention, so the description thereof is omitted here.

Fig. 4 illustrates one example of a control block for performing overturn prevention control while the bicycle robot A travels. In this control block, the integral of an output from the angular velocity sensor is made to be a feedback signal, as in the case of Fig. 8, and the same reference numerals are used as in Fig. 8 for the same portions and the redundant description is omitted.

The angular velocity $\omega$ detected by the angular velocity sensor 8 contains the angular velocity $\omega_1$ component in a lateral direction of inclination of the vehicle body and the angular velocity $\omega_2$ component in an azimuthal direction, and it can be represented by the following equation:

$$\omega = \omega_1 \cos \phi + \omega_2 \sin \phi$$

where $\phi$ is the mounting angle.

As is apparent from Fig. 4, the offset noise signal $\Delta$ is added to the angular velocity signal $\omega$, and the result is integrated by an integrator 21. The zero-set error $\theta_0$ is added to the integrated signal, and the result becomes a feedback signal $R_f$. The deviation between the feedback signal $R_f$ and an input command signal $R_r$ is input into arithmetic means 22, and a steering angle command value $\delta_r$ is formed. The command value $\delta_r$ is output to the actuator 7, and the handlebar 1 (front wheel 2) is steered. The command signal $R_r$ will be described later.

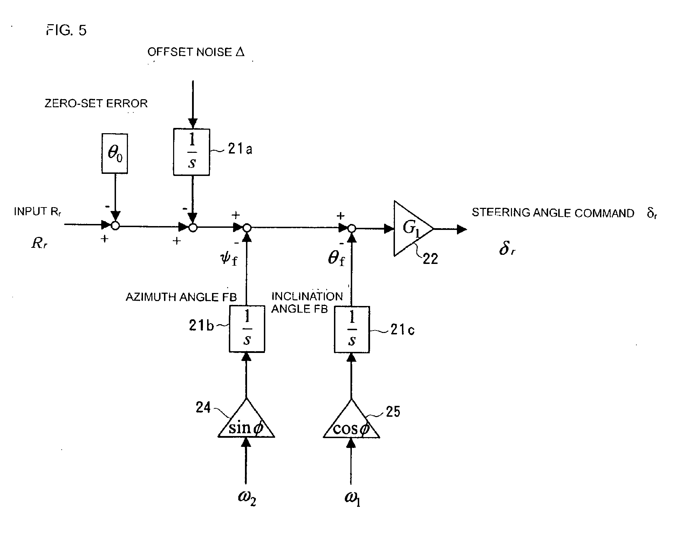

Fig. 5 is an equivalent block diagram that illustrates the angular velocity $\omega$ in the block diagram of Fig. 4 in such a way that the angular velocity $\omega$ is divided into the angular velocity $\omega_1$ component in the lateral direction of inclination and the angular velocity $\omega_2$ component in the azimuthal direction. As is apparent from Fig. 5, the zero-set error $\theta_0$ is directly applied to the input command signal $R_r$, and the integral of the offset noise $\Delta$ evaluated by an integrator 21a is also applied to the command signal $R_r$. A multiplication 24 is performed such that the angular velocity $\omega_2$ in the azimuthal direction is multiplied by a gain (= $\sin \phi$), the result is integrated by an integrator 21b, and a feedback signal $\psi_f$ in the azimuthal direction is obtained. Similarly, a multiplication 25 is performed such that the angular velocity $\omega_1$ in the lateral direction of inclination is multiplied by a gain (= $\cos \phi$), the result is integrated by an integrator 21c, and a feedback signal $\theta_f$ in the lateral direction of inclination is obtained.

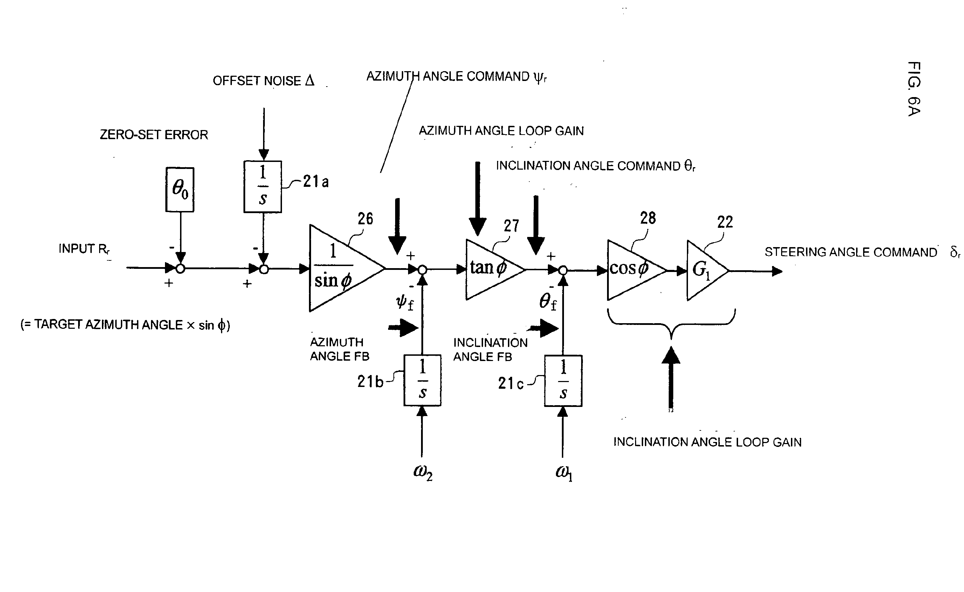

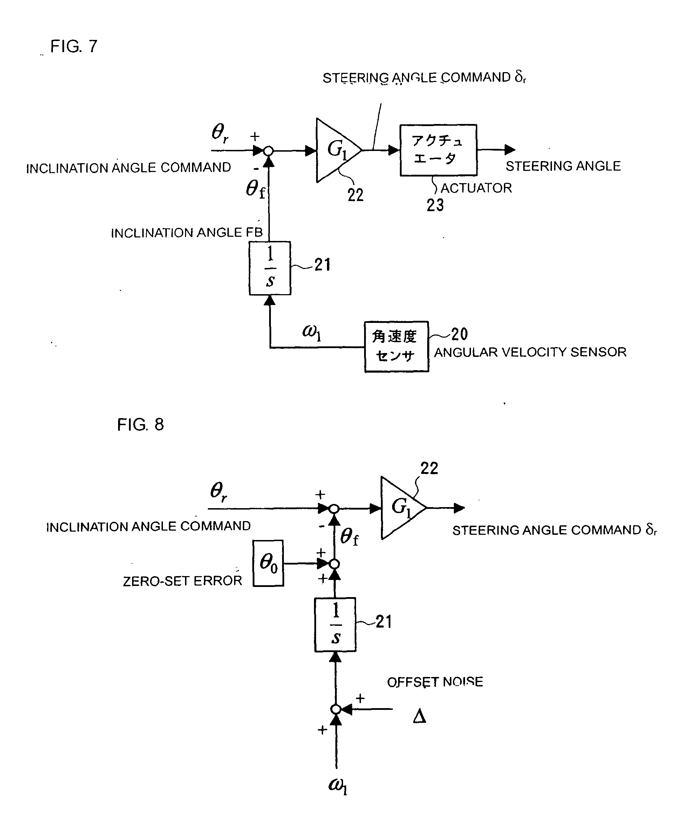

Fig. 6A is an equivalent block diagram into which the block diagram of Fig. 5 is further rewritten. Fig. 6B is a block diagram in which the bicycle in a steady travel state (input $R_r$ is input so as to increase at a constant speed in a ramp-like manner) is added to Fig. 6A, illustrating an overall control system.

In Fig. 6B, the bicycle A is a bicycle model that includes the actuator 7 for steering the handlebar. When the handlebar 1 is steered in accordance with the handlebar steering angle command $\delta_r$ and a movement of some kind is performed by the bicycle A in response thereto, the inclination angle $\theta$ is thereby determined. When the inclination angle is $\theta$, the centripetal force tending to travel in a curve is represented by
mg tan $\theta \approx$ mg $\theta$ (m: the mass of the bicycle, g: the acceleration of gravity).

The centrifugal force is represented as $mv\omega_2$ where v is the velocity of the bicycle A and $\omega_2$ is the azimuth angular velocity. Because these two forces are in balance, the following relationship is satisfied:

$$\omega_2 = g\theta/v$$

As a result, as illustrated in Fig. 6B, an inclination angle loop can be written such that it is placed within an azimuth angle loop, and thus, both the inclination angle loop and the azimuth angle loop can be stabilized.

The detailed description of Fig. 6B will be provided. After the zero-set error $\theta_0$ and the integral of the offset noise $\Delta$ are applied to the command signal $R_r$, a multiplication 26 is performed such that the resultant command value is multiplied by a gain (= $1/\sin \phi$), and the azimuth angle command $\psi_r$ is obtained. The deviation between the azimuth angle command $\psi_r$ and the feedback signal $\psi_f$ obtained by the integration of the angular velocity $\omega_2$ in the azimuthal direction performed by the integrator 21b is determined. A multiplication 27 is performed such that this deviation (= $\psi_r - \psi_f$) is multiplied by the azimuth angle loop gain (= $\tan \phi$), and the inclination angle command $\theta_r$ is obtained. The deviation between the inclination angle command $\theta_r$ and the feedback signal $\theta_f$ obtained by the integration of the angular velocity $\omega_1$ in the lateral direction of inclination performed by the integrator 21c is determined. When a multiplication 28 is performed such that this deviation (= $\theta_r - \theta_f$) is multiplied by a gain (= $\cos \phi$) and a multiplication 22 is performed such that the resultant is multiplied by the gain $G_1$, the steering angle command $\delta_r$ is thereby obtained. In this case, the product of $\cos \phi$ and $G_1$ is the inclination angle loop gain. The arithmetic means 22 having the gain $G_1$ may be basically the same as the arithmetic means 22 having the inclination angle loop gain $G_1$ illustrated in Fig. 7.

The steering angle command $\delta_r$ is input into the bicycle A (including the actuator 7). The output inclination angle $\theta$ in the lateral direction of inclination is transformed into the angular velocity $\omega_1$ by a differentiator 29. A multiplication 30 is performed such that the inclination angle θ is multiplied by a gain g/v, and the angular velocity $\omega_2$ in the azimuthal direction is thereby obtained. When the angular velocity $\omega_2$ is integrated by an integrator 31, the azimuth angle is obtainable.

As is apparent from Fig. 6B, when the azimuth angle command $\psi_r$ is a constant, the inclination angle θ converges to 0°. The azimuth angle loop gain (= tan φ) can be freely set in accordance with the mounting angle φ of the angular velocity sensor 8. The response in the azimuthal direction can be freely changed. When a target azimuth angle × sin φ is input as the command signal $R_r$, the orientation can be controlled. The azimuth angle command is affected by the offset and the noise, and thus, the bicycle can be guided to a target position by correction of the position using image recognition performed by other position recognition means, for example, a mounted camera if needed.

As described above, because the angular velocity ω output from the angular velocity sensor 8 has the azimuth angle component $\omega_2$ and the angular velocity component $\omega_1$, similar advantages to those occurring when the azimuth angle loop is set outside the inclination angle loop are obtainable. The zero-set error merely provides an initial value of the azimuth angle command $\psi_r$ with a deviation. Therefore, if the vehicle body is inclined in the initial state, it can be immediately returned to an upright position (θ = 0°). For the offset noise, the integral thereof merely affects the azimuth angle command. That is, the zero-set error and the offset noise are incorporated into the azimuth angle command $\psi_r$, and the inclination angle is automatically controlled in the internal loop (inclination angle loop). Accordingly, the two-wheel vehicle can be reliably prevented from overturning.

In the foregoing embodiment, the prevention of overturning of the bicycle robot is described. However, the present invention is not limited to this embodiment. The present invention is applicable to an automatically controlled two-wheel vehicle with a human driver and other types of vehicle. In the foregoing embodiment, example overturn prevention control using the inertia rotor 9 during halts or while the vehicle travels at a very slow speed is described. However, it is, of course, understood that the present invention is applicable to a bicycle that does not have the inertia rotor 9. In this case, if the vehicle body is inclined when the vehicle starts traveling, it affects the azimuth angle. In contrast to this, for a bicycle that controls its balance using the inertia rotor 9 during halts, the initial inclination angle θ of the vehicle body is substantially 0° and substantially no zero-set error occurs, so it can be accurately controlled to a target orientation.

Brief Description of Drawings

Fig. 1 is a perspective view of one embodiment of a bicycle robot to which an overturn prevention control device according to the present invention is applied.
Fig. 2 is a side view of the bicycle robot.
Fig. 3 is an illustration that shows definitions of symbols used for describing an overturn prevention control device according to the present invention.
Fig. 4 is a block diagram of an overturn prevention control device according to the present invention.
Fig. 5 is an equivalent block diagram in which the block diagram of Fig. 4 is resolved into angular velocity components.
Fig. 6A is an equivalent block diagram into which the block diagram of Fig. 5 is further rewritten.
Fig. 6B is a block diagram in which a bicycle being in a steady travel state is added to Fig. 6A, illustrating an overall control system.
Fig. 7 is an ideal block diagram of an overturn prevention control device being a reference example.
Fig. 8 is an actual block diagram in which error factors are added to the block diagram of Fig. 7.
Fig. 9 is an equivalent block diagram into which the block diagram of Fig. 8 is rewritten.

Reference Numerals

A bicycle robot (body)
1 steering handlebar (steering portion)
2 front wheel
3 rear wheel
4 rear-wheel driving motor (rear-wheel driving portion)
5 frame
6 doll
7 steering actuator
8 angular velocity sensor
8a detection axis
9 inertia rotor
10 balance motor
11 encoder (rotation sensor)
12 control substrate
13 battery

**Claims**

1. An overturn prevention control device for a two-wheel vehicle having a vehicle body, a steerable front wheel provided to a front end of the vehicle body, an actuator that steers the front wheel, a rear wheel provided to a rear end of the vehicle body, and a rear-wheel driving portion that drives the rear wheel, the overturn prevention control device comprising:

an angular velocity sensor having a detection axis, being mounted on the vehicle body such that the detection axis is downwardly inclined at a predetermined angle relative to a forward direction of the vehicle body, and detecting an angular velocity $\omega$ about the detection axis and control means for outputting a steering angle command signal $\delta_r$ for controlling the actuator,

wherein the control means includes integration means for integrating the angular velocity $\omega$ to obtain a first angle signal and steering-angle-signal generating means for generating the steering angle command signal $\delta_r$ using a deviation between the first angle signal and an externally provided second angle signal, and
wherein the first angle is controlled so as to be made near the second angle by inputting of the steering angle command signal $\delta_r$ into the actuator.

2. The overturn prevention control device for a two-wheel vehicle according to Claim 1, wherein a mounting angle $\phi$ of the detection axis of the angular velocity sensor relative to a horizontal axis is an angle that allows an angular velocity $\omega_1$ in a lateral direction of inclination of the vehicle body and an angular velocity $\omega_2$ in an azimuthal direction to be extracted from the angular velocity $\omega$.

3. The overturn prevention control device for a two-wheel vehicle according to Claim 1 or 2, wherein the angular velocity $\omega$ detected by the angular velocity sensor is represented by

$$\omega = \omega_1 \cos \phi + \omega_2 \sin \phi$$

where $\phi$ is a mounting angle of the detection axis relative to a horizontal axis, $\omega_1$ is an angular velocity in a lateral direction of inclination of the vehicle body, and $\omega_2$ is an angular velocity in an azimuthal direction.

4. The overturn prevention control device for a two-wheel vehicle according to Claim 3, wherein the second angle signal is given by a target azimuth angle $\times \sin \phi$.

FIG. 1

FIG. 2

HORIZONTAL AXIS

DETECTION AXIS 8a

FIG. 3

(a)

(b)

FIG. 4

STEERING ANGLE COMMAND $\delta_r$

$(\omega = \omega_1 \cos\phi + \omega_2 \sin\phi)$

FIG. 5

OFFSET NOISE $\Delta$

ZERO-SET ERROR

$\theta_0$

$\dfrac{1}{s}$ ~21a

INPUT $R_r$

$R_r$

$\psi_f$

$\theta_f$

STEERING ANGLE COMMAND $\delta_r$

$G_1$

22

$\delta_r$

AZIMUTH ANGLE FB

INCLINATION ANGLE FB

21b~ $\dfrac{1}{s}$

$\dfrac{1}{s}$ ~21c

24~ $\sin\phi$

$\cos\phi$ ~25

$\omega_2$

$\omega_1$

FIG. 6A

EP 1 977 964 A1

OFFSET NOISE Δ

AZIMUTH ANGLE COMMAND $\psi_r$

ZERO-SET ERROR

AZIMUTH ANGLE LOOP GAIN

INCLINATION ANGLE COMMAND $\theta_r$

$\theta_0$

$\dfrac{1}{s}$   21a

26

27

28   22

INPUT $R_r$

$\dfrac{1}{\sin\phi}$

$\tan\phi$

$\cos\phi$   $G_1$

STEERING ANGLE COMMAND $\delta_r$

(= TARGET AZIMUTH ANGLE × $\sin\phi$)

$\psi_f$

$\theta_f$

AZIMUTH ANGLE FB

INCLINATION ANGLE FB

21b   $\dfrac{1}{s}$

21c   $\dfrac{1}{s}$

$\omega_2$

$\omega_1$

INCLINATION ANGLE LOOP GAIN

FIG. 6B

FIG. 7

STEERING ANGLE COMMAND $\delta_r$

$\theta_r$ +

INCLINATION ANGLE COMMAND

−

$\theta_f$

$G_1$

アクチュ
エータ

STEERING ANGLE

ACTUATOR

22

23

INCLINATION ANGLE FB

$\dfrac{1}{s}$ ~21

$\omega_1$

角速度
センサ ~20

ANGULAR VELOCITY SENSOR

FIG. 8

22

$\theta_r$

INCLINATION ANGLE COMMAND

+

−

$\theta_f$

$G_1$

STEERING ANGLE COMMAND $\delta_r$

$\theta_0$

+
+

ZERO-SET ERROR

$\dfrac{1}{s}$ ~21

OFFSET NOISE

+

$\Delta$

+

$\omega_1$

FIG. 9

OFFSET NOISE Δ

ZERO-SET ERROR

$\theta_0$    $\dfrac{1}{s}$ 21

INCLINATION ANGLE COMMAND

INCLINATION ANGLE COMMAND $\theta_r$

+    +    +    $G_1$ 22    STEERING ANGLE COMMAND $\delta_r$

−

$\theta_f$

INCLINATION ANGLE FB

21  $\dfrac{1}{s}$    INCLINATION ANGLE LOOP GAIN

$\omega_1$

15

**INTERNATIONAL SEARCH REPORT**

| International application No. |
|---|
| PCT/JP2006/321617 |

A. CLASSIFICATION OF SUBJECT MATTER
*B62K21/10*(2006.01)i, *B62J39/00*(2006.01)i

According to International Patent Classification (IPC) or to both national classification and IPC

B. FIELDS SEARCHED

Minimum documentation searched (classification system followed by classification symbols)
B62K21/00, B62J39/00, A63H17/16, A63H17/21, A63H17/22

Documentation searched other than minimum documentation to the extent that such documents are included in the fields searched
Jitsuyo Shinan Koho          1922-1996   Jitsuyo Shinan Toroku Koho    1996-2007
Kokai Jitsuyo Shinan Koho    1971-2007   Toroku Jitsuyo Shinan Koho    1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2006-20652 A (Satoru KOJIMA),<br>27 January, 2006 (27.01.06),<br>(Family: none) | 1-4 |
| A | JP 7-215258 A (Honda Motor Co., Ltd.),<br>15 August, 1995 (15.08.95),<br>(Family: none) | 1-4 |
| A | JP 62-238183 A (Yamaha Motor Co., Ltd.),<br>19 October, 1987 (19.10.87),<br>(Family: none) | 1-4 |
| A | WO 2004/054678 A1 (Satoru KOJIMA),<br>01 July, 2004 (01.07.04),<br>& GB 2412331 A          & US 2006/0085111 A1 | 1-4 |

☐ Further documents are listed in the continuation of Box C.          ☐ See patent family annex.

| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
|---|---|

| Date of the actual completion of the international search<br>      09 January, 2007 (09.01.07) | Date of mailing of the international search report<br>      23 January, 2007 (23.01.07) |
|---|---|
| Name and mailing address of the ISA/<br>      Japanese Patent Office | Authorized officer |
| Facsimile No. | Telephone No. |

Form PCT/ISA/210 (second sheet) (April 2005)

**EP 1 977 964 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2577593 B
- JP 2005348373 A